(19) Europäisches Patentamt
European Patent Office
Office européen des brevets

(11) EP 2 551 286 B1

(12) **EUROPEAN PATENT SPECIFICATION**

(45) Date of publication and mention of the grant of the patent:
**22.04.2015 Bulletin 2015/17**

(21) Application number: **11759010.9**

(22) Date of filing: **22.03.2011**

(51) Int Cl.:
***C08F 222/02*** *(2006.01)* ***C08F 220/06*** *(2006.01)*

(86) International application number:
**PCT/JP2011/001677**

(87) International publication number:
**WO 2011/118200 (29.09.2011 Gazette 2011/39)**

(54) **2-METHYLENE GLUTARIC ACID COPOLYMER AND METHOD FOR PRODUCING SAME**

2-METHYLEN-GLUTARINSÄURE-COPOLYMER UND VERFAHREN ZU SEINER HERSTELLUNG

COPOLYMÈRE DE 2-MÉTHYLÈNE ET D'ACIDE GLUTARIQUE ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.03.2010 JP 2010069366**

(43) Date of publication of application:
**30.01.2013 Bulletin 2013/05**

(73) Proprietor: **Nippon Shokubai Co., Ltd.**
**Osaka-shi, Osaka 541-0043 (JP)**

(72) Inventors:
- **MICHITAKA, Daisuke**
  **Osaka 564-8512 (JP)**
- **YONEDA, Atsuro**
  **Osaka 564-8512 (JP)**
- **NAKANISHI, Sachiko**
  **Osaka 564-8512 (JP)**
- **SAITO, Makoto**
  **Osaka 564-8512 (JP)**

(74) Representative: **Glawe, Delfs, Moll**
**Partnerschaft mbB von**
**Patent- und Rechtsanwälten**
**Postfach 26 01 62**
**80058 München (DE)**

(56) References cited:
**JP-A- 1 297 406**
**JP-A- 7 206 933**
**JP-A- 10 077 597**
**JP-A- 10 077 597**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 551 286 B1

## Description

TECHNICAL FIELD

The present invention relates to a 2-methylene glutaric acid copolymer and a method for producing the same.

BACKGROUND ART

Stabilizers for hydrogen peroxide have been used for bleaching of cellulosic fibers with hydrogen peroxide for a long time. When hydrogen peroxide undergoes abnormal decomposition, terminal glucose of cellulose becomes oxidized and embrittlement of fibers occurs; therefore, sodium silicate has been used as a stabilizer of hydrogen peroxide for the purpose of preventing embrittlement. Although sodium silicate has excellent stabilizing effect and allows improvement in whiteness through capturing of heavy metal ions that enhance decomposition of hydrogen peroxide etc., it causes problems such as deterioration in aesthetic property as a result of adhering of silica scales on a treated material, and deposition of silica scales on devices. Therefore, there have been attempts to develop various bleaching assistants.

For example, as a fiber treatment agent that exerts excellent bleaching effect and allows fine aesthetic property for a bleached object, a fiber treatment agent containing an acrylic acid - maleic acid based copolymer (salt) having a certain level of magnesium ion capturing ability etc., has been proposed (Patent Literature 1).

On the other hand, it has been disclosed that a polymer obtained through polymerization of 2-methylene glutaric acid and an unsaturated carboxylic acid at a ratio of 100/0 to 100/50 in mole ratio is useful not as a fiber treatment agent but as a pigment dispersant for coated papers (Patent Literature 2).

Furthermore, a detergent composition containing a polymer obtained by polymerizing dimethyl 2-methylene glutarate and hydrolyzing of a polymerization product is disclosed (Patent Literature 3).

CITATION LIST

[PATENT LITERATURE]

[PTL 1] Japanese Laid-Open Patent Publication No. 2000-143737
[PTL 2] Japanese Laid-Open Patent Publication No. H10-77597
[PTL 3] Japanese Laid-Open Patent Publication No. H10-60478

SUMMARY OF THE INVENTION

PROBLEMS TO BE SOLVED BY THE INVENTION

However, in recent years, associated with a higher demand in the performance of fiber treatment agents, there has been a higher demand for performance more superior than hitherto known products with regard to capability (hydrogen peroxide stabilizing ability) for suppressing decomposition of hydrogen peroxide by trace heavy metals in a bleaching step of fiber treatment.

Thus, the present invention has been made in view of such conventional problem, and an objective of the present invention is to provide: a copolymer that displays a hydrogen peroxide stabilizing ability more superior than hitherto known products while maintaining excellent capturing ability of polyvalent metals; and a method for producing the copolymer.

SOLUTION TO THE PROBLEMS

In order to solve the above described problem, the present inventors have conducted thorough research. As a result, the present inventors have discovered that a 2-methylene glutaric acid copolymer including a structural unit derived from a 2-methylene glutaric acid (salt) at a certain proportion with respect to 100 mass% of structural units derived from total monomers exerts excellent hydrogen peroxide stabilizing ability, and have accomplished the present invention.

That is, a 2-methylene glutaric acid copolymer according to the present invention is a copolymer including: a structural unit derived from a 2-methylene glutaric acid (salt) at a proportion of 30 to 70 mass% (acid form equivalent) with respect to 100 mass% of structural units derived from total monomers; and a structural unit derived from an unsaturated carboxylic acid monomer at a proportion of 30 to 70 mass% (acid form equivalent) with respect to 100 mass%

of structural units derived from total monomers.

Provided in another mode of the present invention is a 2-methylene glutaric acid copolymer obtained through polymerization of a mixture including a 2-methylene glutaric acid (salt) at a proportion of 30 to 70 mass% (acid form equivalent) with respect to 100 mass% of a total monomer composition, and an unsaturated carboxylic acid monomer at a proportion of 30 to 70 mass% (acid form equivalent) with respect to 100 mass% of a total monomer composition.

Provided in another mode of the present invention is a method for producing a 2-methylene glutaric acid copolymer, and the method includes polymerizing a mixture including a 2-methylene glutaric acid (salt) at a proportion of 30 to 70 mass% (acid form equivalent) with respect to 100 mass% of a total monomer composition, and an unsaturated carboxylic acid monomer at a proportion of 30 to 70 mass% (acid form equivalent) with respect to 100 mass% of a total monomer composition.

## ADVANTAGEOUS EFFECTS OF THE INVENTION

With the 2-methylene glutaric acid copolymer and the method for producing the same of the present invention, it is possible to provide: a 2-methylene glutaric acid copolymer that displays excellent heavy metal capturing ability and fine hydrogen peroxide stabilizing ability, calcium ion capturing ability, and antigelation property; and a method for producing the copolymer. Furthermore, since the copolymer of the present invention has the above described excellent abilities, it can be favorably used in fiber treatment applications, water treatment applications, detergent applications, etc.

## DESCRIPTION OF EMBODIMENTS

The present invention will be described in detail in the following.

### [2-Methylene Glutaric Acid Copolymer]

#### (2-Methylene Glutaric Acid Monomer)

A characteristic of a 2-methylene glutaric acid copolymer of the present invention is having a structural unit derived from a 2-methylene glutaric acid (salt). The 2-methylene glutaric acid copolymer of the present invention is preferably obtained through copolymerization of monomers (composition) in which a 2-methylene glutaric acid monomer is essential. In the present invention, a 2-methylene glutaric acid monomer represents 2-methylene glutaric acid, a 2-methylene glutarate, or a monomer in which one portion of or all carboxyl groups in 2-methylene glutaric acid are substituted with corresponding esters, amides, or the like. When the monomer that is to be used as the 2-methylene glutaric acid monomer is the above described monomer in which one portion of or all carboxyl groups in 2-methylene glutaric acid are substituted with corresponding esters, amide, or the like; the structural unit derived from the 2-methylene glutaric acid (salt) is introduced in the copolymer through a post-processing such as hydrolysis or the like.

As the above described 2-methylene glutaric acid monomer, 2-methylene glutaric acid or a 2-methylene glutarate is preferable since an obtained copolymer will have excellent hydrogen peroxide stabilizing ability. Thus, the copolymer of the present invention is preferably obtained through copolymerization of a monomer composition in which 2-methylene glutaric acid or a 2-methylene glutarate is essential.

In the present invention, the 2-methylene glutaric acid (salt) represents 2-methylene glutaric acid or a 2-methylene glutarate. Unless particularly described otherwise, "salt" of the 2-methylene glutarate represents metal salts, ammonium salts, and primary to quarternary organic amine salts (the same applies to "salt" of a monomer having other acid groups, and to "salt" of a constitutional unit included in a 2-methylene glutaric acid copolymer and derived from a monomer having an acid group). The above described metal salts include alkali metal salts such as lithium salts, sodium salts, and potassium salts, alkaline earth metal salts such as calcium salts and magnesium salts, and salts of aluminum, iron, and the like. In addition, the above described organic amine salts include: alkanolamine salts such as monoethanolamine salts and triethanolamine salts; alkylamine salts such as monoethylamine salts and triethylamine salts; and salts of organic amines of polyamines such as ethylenediamine salts and triethylenediamine salts.

In the present invention, the structural unit derived from the 2-methylene glutaric acid (salt) is a structural unit formed through radical polymerization of the 2-methylene glutaric acid (salt), and, for example, is represented by the following general formula (1).

[Chem. 1]

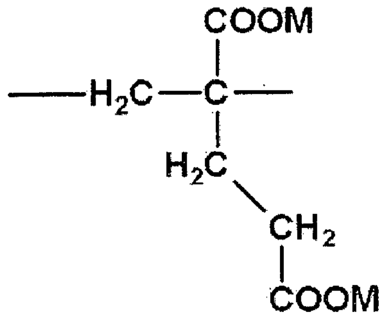

General Formula (1)

(In general formula (1), each M independently represents a hydrogen atom, a metal atom, an ammonium group, or an organic amine group.)

In the above described general formula (1), each M independently represents a hydrogen atom, an alkali metal atom such as a sodium atom or a potassium atom, an alkaline earth metal atom, an ammonium ion, or a quarternary amine salt.

The above described structural unit derived from the 2-methylene glutaric acid (salt) can also be formed through a post-polymerization process such hydrolysis of a structure derived from a monomer in which one portion of or all carboxyl groups of 2-methylene glutaric acid is substituted with corresponding esters, amides, or the like.

For obtaining the copolymer of the present invention, a proportion of the 2-methylene glutaric acid monomer in total monomers (total of the 2-methylene glutaric acid monomer, the unsaturated carboxylic acid monomer, and other monomers) with respect to 100 mass% of total monomers is preferably not smaller than 30 mass% but not larger than 70 mass% (acid form equivalent), more preferably not smaller than 32 mass% but not larger than 68 mass% (acid form equivalent), and further preferably not smaller than 33 mass% but not larger than 67 mass% (acid form equivalent), and most preferably not smaller than 35 mass% but not larger than 65 mass% (acid form equivalent). When the proportion of the 2-methylene glutaric acid monomer is in the above described range, heavy metal chelating ability of the 2-methylene glutaric acid copolymer tends to improve, and thereby the copolymer can be suitably used as a fiber treatment agent.

In the present invention, "acid form equivalent" refers to calculating a 2-methylene glutarate also as 2-methylene glutaric acid when calculating a mass with respect to the total monomers.

(Unsaturated Carboxylic Acid Monomer)

As described above, a characteristic of the 2-methylene glutaric acid copolymer of the present invention is having a structural unit derived from the 2-methylene glutaric acid (salt), as well as having a structural unit derived from the unsaturated carboxylic acid monomer. The 2-methylene glutaric acid copolymer of the present invention is preferably obtained through copolymerization of monomers (composition) in which the 2-methylene glutaric acid monomer and the unsaturated carboxylic acid monomer are essential.

In the present invention, an unsaturated carboxylic acid monomer refers to a monomer having at least one carboxyl group (salt) and a carbon-carbon double bond (excluding a monomer that qualifies as the 2-methylene glutaric acid monomer). Specific examples thereof include acrylic acid, methacrylic acid, maleic acid, fumaric acid, itaconic acid, crotonic acid, and salts thereof. Here, "salt" is that described above.

In the present invention, a structural unit derived from an unsaturated carboxylic acid monomer is a structural unit formed through radical polymerization of an unsaturated carboxylic acid monomer (salt). For example, a structural unit derived from sodium acrylate is represented as - $CH_2CH(COONa)$ -.

For obtaining the copolymer of the present invention, a proportion of the unsaturated carboxylic acid monomer in total monomers (total of the 2-methylene glutaric acid monomer, the unsaturated carboxylic acid monomer, and other monomers) with respect to 100 mass% of total monomers is preferably not smaller than 30 mass% but not larger than 70 mass% (acid form equivalent), more preferably not smaller than 32 mass% but not larger than 68 mass% (acid form equivalent), and further preferably not smaller than 33 mass% but not larger than 67 mass% (acid form equivalent), and most preferably not smaller than 35 mass% but not larger than 65 mass% (acid form equivalent). When the proportion of the unsaturated carboxylic acid monomer is in the above described range, heavy metal chelating ability of the 2-methylene glutaric acid copolymer tends to improve, and thereby the copolymer can be suitably used as a fiber treatment

agent.

In the present invention, "acid form equivalent" refers to calculating even a salt of an unsaturated carboxylic acid monomer as an unsaturated carboxylic acid monomer, when calculating a mass with respect to the total monomers. It refers to for example, when calculating a mass with respect to total monomers, sodium acrylate is also calculated as acrylic acid.

(Other Monomers)

As described above, although a characteristic of the 2-methylene glutaric acid copolymer according to the present invention is having a structural unit derived from the 2-methylene glutaric acid (salt) as well as a structural unit derived from an unsaturated carboxylic acid monomer; it may optionally also have a structural unit derived from other monomers. The 2-methylene glutaric acid copolymer of the present invention may be obtained through copolymerization of monomers (composition) that includes, in addition to the 2-methylene glutaric acid monomer and the unsaturated carboxylic acid monomer, other monomers.

There is no particular limitation in the other monomers as long as they are monomers copolymerizable with the 2-methylene glutaric acid monomer and/or the unsaturated carboxylic acid monomer (however, excluding a monomer that qualifies as the 2-methylene glutaric acid monomer or the unsaturated carboxylic acid monomer). Examples of the other monomers include: hydroxyl group including alkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, and $\alpha$-hydroxymethyl ethyl (meth)acrylate; alkyl (meth)acrylates that are esters of (meth)acrylic acid with an alkyl group having a carbon number 1 to 18, such as methyl (meth)acrylate, ethyl (meth)acrylate, butyl (meth)acrylate, cyclohexyl (meth)acrylate, and lauryl (meth)acrylate; amino group including monomers such as dimethylaminoethyl (meth)acrylate, allylamine, or a quarternary substance thereof; amide group including monomers such as (meth)acrylamide, dimethyl acrylamide, and isopropyl acrylamide; vinyl esters such as vinyl acetate; alkenes such as ethylene and propylene; aromatic vinyl based monomers such as styrene; maleimide derivatives such as maleimide, phenylmaleimide, and cyclohexylmaleimide; nitrile group including vinyl based monomers such as (meth)acrylonitrile; monomers including a sulfonic acid group such as 3-allyloxy-2-hydroxypropanesulfonic acid, 2-acrylamide-2-methylpropanesulfonic acid, styrenesulfonic acid, and vinylsulfonic acid, and salts of those; monomer including a phosphonic acid group such as vinylphosphonic acid and (meth)allylphosphonic acid; aldehyde group including vinyl based monomers such as (meth)acrolein; alkyl vinyl ethers such as methyl vinyl ether, ethyl vinyl ether, and butyl vinyl ether; monomers including other functional groups, such as vinyl chloride, vinylidene chloride, allyl alcohol, and vinylpyrrolidone; polyalkylene glycol chain including monomers that are monomers having a structure obtained by adding 1 to 300 mol of an alkylene oxide of an unsaturated alcohol, such as polyalkylene glycol (meth)acrylate, monoalkoxy polyalkylene glycol (meth)acrylate, vinyl alcohol, (meth)allyl alcohol, and isoprenol; etc. With regard to these other monomers, a single type may be used by itself, or a combination of two or more types may be used.

For obtaining the copolymer of the present invention, a proportion of other monomers in total monomers (total of the 2-methylene glutaric acid monomer, the unsaturated carboxylic acid monomer, and other monomers) with respect to 100 mass% of total monomers is preferably 0 mass% or larger but not larger than 30 mass%, more preferably 0 mass% or larger but not larger than 25 mass%, and further preferably 0 mass% or larger but not larger than 20 mass%, and most preferably 0 mass% or larger but not larger than 10 mass% (acid form equivalent). When the proportion of other monomers is in the above described range, heavy metal chelating ability of the 2-methylene glutaric acid copolymer tends to improve, and thereby the copolymer can be suitably used as a fiber treatment agent.

When calculating a mass of other monomers with respect to total monomers in the present invention; for monomers having a salt of an acid group, calculation is performed by considering that as being in an acid form, and for monomers having a salt of amino group, calculation is performed by considering that as a monomer having a corresponding amino group.

(Structural Unit of 2-Methylene Glutaric Acid Copolymer)

The 2-methylene glutaric acid copolymer of the present invention includes, as essential components, a structural unit derived from the 2-methylene glutaric acid (salt) (2-methylene glutaric acid (salt) derived structural unit), and a structural unit derived from the unsaturated carboxylic acid monomer.

With respect to 100 mass% of the total structural units (a total of the structural unit derived from the 2-methylene glutaric acid (salt), the structural unit derived from the unsaturated carboxylic acid monomer, and structural units derived from other monomers); the 2-methylene glutaric acid copolymer of the present invention includes the structural unit derived from the 2-methylene glutaric acid (salt) preferably by not less than 30 mass% but not more than 70 mass% (acid form equivalent), and more preferably by not less than 32 mass% but not more than 68 mass% (acid form equivalent), further preferably by not less than 33 mass% but not more than 67 mass% (acid form equivalent), and most preferably

by not less than 35 mass% but not more than 65 mass% (acid form equivalent). When the proportion of the structural unit derived from the 2-methylene glutaric acid (salt) is in the above described range, heavy metal chelating ability of the 2-methylene glutaric acid copolymer tends to improve, and thereby the copolymer can be suitably used as a fiber treatment agent. When the proportion of the structural unit derived from the 2-methylene glutaric acid (salt) is smaller than 30 mass%, capturing ability of calcium ion and the like reduces, and thereby aesthetic property of a treated fiber tends to deteriorate. Furthermore, when the proportion of the structural unit derived from the 2-methylene glutaric acid (salt) is within the above described range, antigelation property of the 2-methylene glutaric acid copolymer becomes excellent.

With respect to 100 mass% of the total structural units (a total of the structural unit derived from the 2-methylene glutaric acid (salt), the structural unit derived from the unsaturated carboxylic acid monomer, and structural units derived from other monomers); the 2-methylene glutaric acid copolymer of the present invention includes the structural unit derived from the unsaturated carboxylic acid monomer (unsaturated carboxylic acid monomer derived structural unit) preferably by not less than 30 mass% but not more than 70 mass% (acid form equivalent), more preferably by not less than 32 mass% but not more than 68 mass% (acid form equivalent), further preferably by not less than 33 mass% but not more than 67 mass% (acid form equivalent), and most preferably by not less than 35 mass% but not more than 65 mass% (acid form equivalent). When the proportion of the unsaturated carboxylic acid monomer is in the above described range, heavy metal chelating ability of the 2-methylene glutaric acid copolymer tends to improve, and thereby the copolymer can be suitably used as a fiber treatment agent.

The 2-methylene glutaric acid copolymer of the present invention may, optionally, include structural units derived from other monomers. In such a case, with respect to 100 mass% of the total structural units (a total of the structural unit derived from the 2-methylene glutaric acid (salt), the structural unit derived from the unsaturated carboxylic acid monomer, and structural units derived from other monomers), the structural units derived from the other monomers are included by preferably 0 mass% or more but not more than 30 mass%, more preferably 0 mass% or more but not more than 25 mass%, further preferably 0 mass% or more but not more than 20 mass%, and most preferably 0 mass% or more but not more than 10 mass% (acid form equivalent). When the proportion of the other monomers is in the above described range, heavy metal chelating ability of the 2-methylene glutaric acid copolymer tends to improve, and thereby the copolymer can be suitably used as a fiber treatment agent. Among the structures derived from the 2-methylene glutaric acid monomer, structural units other than the structural unit derived from the 2-methylene glutaric acid (salt) (e.g., a structure derived from the above described monomer that has a substitution to corresponding esters, amides, or the like, but not hydrolyzed) are to be included as the structural units derived from other monomers.

A weight average molecular weight of the 2-methylene glutaric acid copolymer obtained by the production method of the present invention is, specifically, preferably 1000 to 100000, more preferably 2000 to 30000, and further preferably 3000 to 20000. If the value of the weight average molecular weight becomes too large, viscosity of the copolymer increases and handling of the copolymer may become troublesome. On the other hand, if the value of the weight average molecular weight becomes too small, power of chelating heavy metal ions decreases and sufficient performance as a fiber treatment agent may not be exerted. It should be noted that, as the value of the weight average molecular weight of the 2-methylene glutaric acid copolymer according to the present invention, a value measured by a method described later in Examples is to be used.

Furthermore, a number average molecular weight of the 2-methylene glutaric acid copolymer according to the present invention is, specifically, preferably 500 to 50000, more preferably 1000 to 15000, and further preferably 2000 to 10000. If the value of the number average molecular weight becomes too large, viscosity of the copolymer increases and handling of the copolymer may become troublesome. On the other hand, if the value of the number average molecular weight becomes too small, power for chelating heavy metal ions decreases and sufficient performance as a fiber treatment agent may not be exerted. It should be noted that, as the value of the number average molecular weight of the 2-methylene glutaric acid copolymer according to the present invention, a value measured by a method described later in Examples is to be used.

[Method for Producing 2-Methylene Glutaric Acid Copolymer]

Unless particularly mentioned otherwise, as the method for producing the 2-methylene glutaric acid copolymer of the present invention, a method that is similar to or that is a modification of a polymerization method known in the art can be used. For the method for producing the 2-methylene glutaric acid copolymer of the present invention, the producing can be conducted through copolymerization of monomer components including, as essential components, the 2-methylene glutaric acid monomer and the unsaturated carboxylic acid monomer. Furthermore, when conducting the copolymerization of the monomer components, if necessary, the above described other monomers may be further copolymerized together.

As a method for adding the monomers to a reaction container, from a standpoint of simplifying production processes, a method of adding a large portion of the monomers before initiating polymerization is preferably used. With

respect to the total used amount, a large portion refers to not smaller than 70 mass%, and further preferably not smaller than 80 mass%, particularly preferably not smaller than 90 mass%, and most preferably 100 mass%. When the monomers are to be added after the polymerization, continuous input methods such as dripping and separate inputting can be used. Furthermore, the monomers may be introduced into the reaction container by themselves, or may be pre-mixed with a later described solvent or the like. When the 2-methylene glutaric acid monomer is added as described above, the production process can be simplified, the amount of residual monomers is significantly reduced, and the iron ion chelating ability of an obtained polymer is improved.

Adding a component before initiating polymerization refers to a so-called initial loading in a batch method, and refers to addition at a position before a position where polymerization is initiated in a pathway of a reaction apparatus for a continuous method.

In the production method of the present invention, monomer components may be copolymerized using a polymerization initiator. It should be noted that, in order to form the structural units constituting the 2-methylene glutaric acid copolymer as described above, the type and usage amount of the monomers included in the monomer component are configured as appropriate. For example, with respect to 100 mass% of the total monomers (total of the 2-methylene glutaric acid monomer, the unsaturated carboxylic acid monomer, and other monomers), the composition proportion of each of the monomers forming the 2-methylene glutaric acid copolymer is, preferably, for the 2-methylene glutaric acid monomer, not smaller than 30 mass% but not larger than 70 mass% (acid form equivalent), and for the unsaturated carboxylic acid monomer, not smaller than 30 mass% but not larger than 70 mass% (acid form equivalent). Furthermore, as described above, when the total of the total monomer is 100 mass%, other monomers that are copolymerizable with those described above may be used at an amount of 0 to 30 mass%. More preferably, the proportion of the 2-methylene glutaric acid monomer is not smaller than 32 mass% but not larger than 68 mass% and the proportion of the unsaturated carboxylic acid monomer is not smaller than 32 mass% but not larger than 68 mass%, and further preferably, the proportion of the 2-methylene glutaric acid monomer is not smaller than 33 mass% but not larger than 67 mass% and the proportion of the unsaturated carboxylic acid monomer is not smaller than 33 mass% but not larger than 67 mass%. Most preferably, the proportion of the 2-methylene glutaric acid monomer is not smaller than 35 mass% but not larger than 65 mass% and the proportion of the unsaturated carboxylic acid monomer is not smaller than 35 mass% but not larger than 65 mass%.

With respect to 100 mass% of the total monomers (total of the 2-methylene glutaric acid monomer, the unsaturated carboxylic acid monomer, and other monomers), when the proportion of the 2-methylene glutaric acid monomer is in the above described range, heavy metal chelating ability of the obtained 2-methylene glutaric acid copolymer tends to improve, and thereby the copolymer can be suitably used as a fiber treatment agent. When the proportion of the 2-methylene glutaric acid monomer is smaller than 30 mass%, ability for capturing calcium ion and the like reduces, and thereby aesthetic property of a treated fiber tends to deteriorate.

As the method for producing the 2-methylene glutaric acid copolymer of the present invention, a continuous polymerization method (continuous polymerization) can be adopted from an aspect of efficient producibility. Generally, when polymerization is conducted continuously, if the polymerization is conducted using high concentrations in order to obtain a high production rate, it becomes difficult to obtain a low molecular weight polymer. However, in the production method of the present invention, polymerization is conducted using the above described monomer composition. As a result, a low molecular weight polymer having a narrow molecular weight distribution can be obtained and the amount of residual monomers can be reduced; therefore, an advantage of adopting continuous polymerization becomes large.

Continuous polymerizations include polymerization using a tube type reactor, polymerization using a kneader, polymerization using a movable type belt, and the like.

As the method for producing the 2-methylene glutaric acid copolymer of the present invention, from a physical-property aspect of the obtained polymer, a static polymerization method is preferably adopted. The static polymerization method in the present invention refers to polymerization unaccompanied with forcible agitation using an agitator at the time of the polymerization. The batch method or the continuous method may be used as the static polymerization method. As the continuous method, polymerization using a movable type belt or the like is preferable. Here, continuous polymerization using a tube type reactor is also included as the static polymerization as long as a line mixer is not installed for generating forcible turbulent flows. By adopting the above described method, it is possible to reduce the usage amount of the initiator and reduce the amount of residual monomers.

The static polymerization in the present invention refers to not conducting forcible agitation using an agitator during polymerization, and the materials can be, and preferably, homogeneously mixed in advance before polymerization. As described above, although one portion of the monomers or the polymerization initiator may be added in the reaction solution or at the upper portion of the reaction solution during polymerization, it is preferable to add large portions of those before initiating polymerization. With respect to the total used amount, a large portion refers to not smaller than 70 mass%, further preferably not smaller than 80 mass%, particularly preferably not smaller than 90 mass%, and most preferably 100 mass%.

Preferable examples of conducting the polymerization include: when the batch method is used, (i) a method

of adding the polymerization initiator, water, and the monomers to a reactor, mixing those using an agitator, stopping the agitation, and initiating polymerization through heating, and (ii) a method of mixing the polymerization initiator, water, and the monomers, adding those to a reactor, and conduct polymerization through heating; and when the continuous method is used, a method of mixing (e.g., mixing using a line mixer) the polymerization initiator, water, and the monomers, adding the mixture liquid to one end of a movable type belt, and initiating polymerization using light and/or heat.

It should be noted that, after the static polymerization process, for example, additional steps may be further conducted, such as a step of adding the polymerization initiator for reducing the amount of residual monomers, or a step of adding an additive for inactivating, neutralizing, etc., of additives such as the polymerization initiator and the like. These steps may be conducted under a still condition or under an agitating condition.

For the above described continuous polymerization or static polymerization, although bulk polymerization, suspension polymerization, or emulsion polymerization may be conducted, solution polymerization is preferably used since residual monomers and water-insoluble matters can be reduced. Although description of usable solvents will be provided later, an aqueous solvent or water is preferable, and water is particularly preferable.

<polymerization Initiator>

As the initiator, those known in the art can be used, and suitable examples thereof include: hydrogen peroxide; persulfates such as sodium persulfate, potassium persulfate, and ammonium persulfate; azo compounds such as 2,2'-azobis (2-amidinopropane) hydrochloride, 4,4'-azobis-4-cyanovaleric acid, azobisisobutyronitrile, and 2,2'-azobis (4-methoxy-2,4-dimethylvaleronitrile); and organic peroxides such as benzoyl peroxide, lauroyl peroxide, peracetic acid, di-t-butyl peroxide, and cumene hydroperoxide. Among those polymerization initiators, hydrogen peroxide and persulfates are preferable, and persulfates are most preferable. With regard to those polymerization initiators, a single type may be used by itself, or a combination of two or more types may be used. For example, a preferable mode is a combination of hydrogen peroxide and a persulfate.

<Chain Transfer Agent>

For the method for producing the 2-methylene glutaric acid copolymer of the present invention, a chain transfer agent may be used as a polymer molecular weight modifier as necessary as long as it does not have any adverse effects on the polymerization. Specifically, the chain transfer agent include: thiol based chain transfer agents such as mercaptoethanol, thioglycerol, thioglycolic acid, 2-mercaptopropionic acid, 3-mercaptopropionic acid, thiomalic acid, octyl thioglycolate, octyl 3-mercaptopropionate, 2-mercaptoethanesulphonic acid, n-dodecyl mercaptan, octyl mercaptan, and butyl thioglycolate; halides such as carbon tetrachloride, methylene chloride, bromoform, and bromotrichloroethane; secondary alcohols such as isopropanol, and glycerin; and lower oxides and salt thereof such as phosphorous acid, hypophosphorous acid and salts thereof (sodium hypophosphite, potassium hypophosphite, etc.), and sulfurous acid, sulfurous acid hydrogen, dithionous acid, metabisulfurous acid, and salts thereof (sodium bisulfite, potassium bisulfate, sodium dithionite, potassium dithionite, sodium metabisulfite, potassium metabisulfite, etc.). With regard to the chain transfer agents, a single type may be used by itself, or a combination oftwo or more types may be used.

Using the chain transfer agent has an advantage of being able to suppress the produced 2-methylene glutaric acid copolymer from becoming high molecular weight beyond necessary, and efficiently produce a low molecular weight 2-methylene glutaric acid copolymer. Among those described above, for a copolymerization reaction according to the present invention, sulfurous acid and sulfites are suitably used. As a result, a sulfonic acid group can be quantitatively introduced into a main chain terminal of the obtained 2-methylene glutaric acid copolymer, and it is possible to improve antigelation property of the copolymer.

In the production method according to the present invention, using the sulfurous acid and/or a sulfite (hereinafter, simply described as "sulfurous acid (salt)") as a chain transfer agent is a preferable mode, and in such a case, an initiator is used in addition to the sulfurous acid (salt). Furthermore, as a reaction accelerator, a heavy metal ion may also be used.

The above described sulfurous acid (salt) refers to sulfurous acid or sulfurous acid hydrogen, or salts of those, and suitable forms thereof are salts of sulfurous acid / sulfurous acid hydrogen. When a salt of sulfurous acid / sulfurous acid hydrogen is used, in addition to the above described examples, salts of a metal atom, ammonium, or an organic ammonium are suitable. Preferable examples of the metal atom include: monovalent metal atoms of alkali metals such as lithium, sodium, and potassium; divalent metal atoms of alkaline earth metals such as calcium, and magnesium; and salts of trivalent metal atoms such as aluminum and iron. Furthermore, those suitable as the organic ammonium (organic amine) include alkanolamines such as ethanolamine, diethanolamine, and triethanolamine, and triethylamine and the like. In addition, ammonium may also be used. Therefore, sulfites that are preferably used in the present invention include, for example, sodium bisulfite, potassium bisulfite, ammonium bisulfite, sodium sulfite, potassium sulfite, ammonium sulfite, and the like. Sodium bisulfite is particularly suitable. With regard to the sulfurous acid (salt), a single type may be used by itself, or a combination of two or more types may be used.

<Reaction Accelerator>

For the method for producing the 2-methylene glutaric acid copolymer of the present invention, a reaction accelerator may be added for the purpose of reducing the usage amount of the initiator etc. Examples of the reaction accelerator include heavy metal ions. Heavy metal ions of the present invention refer to metals having a specific gravity of equal to or larger than 4 g/cm$^3$. Preferable examples of the metal ions include those of iron, cobalt, manganese, chromium, molybdenum, tungsten, copper, silver, gold, lead, platinum, iridium, osmium, palladium, rhodium, ruthenium, etc. One or more these heavy metals can be used. Among those described above, iron is more preferable. There is no particular limitation in the ionic valence of the heavy metal ions, and, for example, when iron is used as the heavy metal, iron ions in the initiator may be $Fe^{2+}$, $Fe^{3+}$, or a combination of these.

There is no particular limitation in the above described heavy metal ion as long as they are included in the form of ions, and using a method that utilizes a solution having dissolved therein a heavy metal compound is suitable for superior handleability. The heavy metal compound used in such a case preferably includes a heavy metal ion that is desired to be included in the initiator, and can be determined in accordance with the initiator that is used. When iron is used as the heavy metal ion, heavy metal compounds such as Mohr's salt ($Fe(NH_4)_2(SO_4)_2 \cdot 6H_2O$), ferrous sulfate heptahydrate, ferrous chloride, and ferric chloride are preferably used. Furthermore, when manganese is used as the heavy metal ion, manganese chloride or the like can be suitably used. These heavy metal compounds, which are all water soluble compounds, can be used in an aqueous solution form, and thereby superior handleability can be obtained. It should be noted that the solvent used for the solution for dissolving the heavy metal compound is not limited to water, and any solvent may be used as long as the solvent can dissolve the heavy metal compound and does not prevent the polymerization reaction when producing a hydrophobic group including copolymer of the present invention.

There is no particular limitation in a method for adding the heavy metal ion, and, adding not less than 50 mass% of the usage amount before polymerization is initiated is preferable, and initially loading the entire amount is particularly preferable. When the static polymerization is adopted, it is preferable to pre-mix that with other materials in advance before initiating polymerization. Furthermore, with respect to the entire amount of the reaction solution, the usage amount of that is preferably equal to or smaller than 100 ppm, more preferably equal to or smaller than 70 ppm, further preferably equal to or smaller than 50 ppm, and particularly preferably equal to or smaller than 30 ppm. Adding more than 100 ppm is not preferable since it does not provide the advantageous effect, and the obtained copolymer becomes strongly colored and thereby may not be usable for usage as a detergent composition.

In addition, the contained amount of the heavy metal ion is preferably 0.1 to 10 ppm with respect to the total mass of the polymerization reaction solution at the time of polymerization reaction completion. If the contained amount of the heavy metal ion is less than 0.1 ppm, the advantageous effect by the heavy metal ion may not be sufficiently expressed. On the other hand, if the contained amount of the heavy metal ion is larger than 10 ppm, the color tone of the obtained copolymer may deteriorate. In addition, if the contained amount of the heavy metal ion is high, when the product copolymer is used as a fiber treatment agent, it may cause coloring stains.

It should be noted that, "at the time of polymerization reaction completion" described above refers to a time point when the polymerization reaction in the polymerization reaction solution has substantially completed and when the desired polymer is obtained. For example, when the polymer polymerized in the polymerization reaction solution is to be neutralized with an alkaline component, the contained amount of the heavy metal ion is calculated based on the total mass of the polymerization reaction solution after neutralization. When two or more types of the heavy metal ions are included, the total amount of the heavy metal ions can be set in the above described range.

In the method for producing the 2-methylene glutaric acid copolymer of the present invention, when conducting the polymerization, a reducing compound or a decomposition catalyst of the polymerization initiator may be added to the reaction system in addition to the above described compounds. Examples of the decomposition catalyst of the polymerization initiator include: metal halides such as lithium chloride, lithium bromide, and the like; metal oxides such as titanium oxide, and silicon dioxide; metal salts of inorganic acids such as hydrochloric acid, hydrobromic acid, perchloric acid, sulfuric acid, and nitric acid; carboxylic acids such as formic acid, acetic acid, propionic acid, butyric acid, isobutyric acid, benzoic acid, etc., and esters and metal salts thereof; and heterocyclic amines such as pyridine, indole, imidazole, carbazole, etc., and derivatives thereof. With regard to these decomposition catalysts, a single type may be used by itself, or a combination of two or more types may be used.

In addition, examples of the reducing compound include: organometallic compounds such as ferrocene; inorganic compounds capable of generating metal ions of iron, copper, nickel, cobalt, or manganese, such as iron naphthenate, copper naphthenate, nickel naphthenate, cobalt naphthenate, and manganese naphthenate; inorganic compounds such as boron trifluoride ether addition product, potassium permanganate, and perchloric acid; sulfur-including compounds such as sulfur dioxide, sulfites, sulfate esters, bisulfites, thiosulfates, sulfoxylates, benzenesulfinic acid and substitution products thereof, and homologs of cyclic sulfinic acid such as para-toluenesulfonic acid; mercapto compounds such as octyl mercaptan, dodecyl mercaptan, mercaptoethanol, α-mercaptopropionic acid, thioglycolic acid, thiopropionic acid, sodium α-thiopropionate sulfopropyl ester, and sodium α-thiopropionate sulfoethyl ester; nitrogen including compounds such as hydrazine, β-hydroxyethyl hydrazine, and hydroxylamine; aldehydes such as formaldehyde, acetaldehyde, propionaldehyde, n-butyraldehyde, isobutyraldehyde, and isovaleric aldehyde; and ascorbic acid. Also with regard to these reducing compounds, a single type may be used by itself, or a combination of two or more types may be used. The reducing compounds such as mercapto compounds may be added as a chain transfer agent.

There is no particular limitation in the combination of the chain transfer agent, the initiator, and the reaction accelerator; and that may be selected from those exemplified above as appropriate. For example, as a combination of the chain transfer agent, the initiator, and the reaction accelerator, preferable modes include sodium bisulfite / hydrogen peroxide, sodium bisulfite / sodium persulfate, sodium bisulfite / iron ion, sodium bisulfite / hydrogen peroxide / iron ion, sodium bisulfite / sodium persulfate / iron ion, sodium bisulfite / sodium persulfate / hydrogen peroxide, and sodium bisulfite / oxygen / iron ion. The combination is more preferably sodium persulfate / hydrogen peroxide, sodium persulfate / hydrogen peroxide / iron ion, sodium bisulfite / sodium persulfate, and sodium bisulfite / sodium persulfate / iron ion; and most preferably sodium bisulfite / sodium persulfate / iron ion, and sodium persulfate / hydrogen peroxide / iron ion.

<Usage Amount of Polymerization Initiator etc.>

There is no particular limitation in the usage amount of the initiator as long as the amount allows copolymerization of the monomers; and, with respect to 1 mol of the total monomer components (entire amount of the used monomers), the usage amount is preferably equal to or less than 15 g, and more preferably 1 to 12 g.

When hydrogen peroxide is used as the initiator, the added amount of hydrogen peroxide with respect to 1 mol of the monomers is preferably 1.0 to 10.0 g, and more preferably 2.0 to 8.0 g. If the added amount of hydrogen peroxide is less than 1.0 g, the polymerization average molecular weight of the obtained copolymer tends to be high. On the other hand, if the added amount is more than 10.0 g, the advantageous effect of hydrogen peroxide cannot be obtained as the added amount increases, and adverse influences are observed such as an increase in the residual amount of hydrogen peroxide.

When a persulfate is used as the initiator, the added amount of the persulfate with respect to 1 mol of the monomers is preferably 1.0 to 10 g, and more preferably 2.0 to 5.0 g. If the added amount of the persulfate is too small than this, the molecular weight of the obtained copolymer tends to be high. On the other hand, if the added amount is too large, the advantageous effect of the persulfate cannot be obtained as the added amount increases, and adverse influences are observed such as reduction in the purity of the obtained copolymer.

When hydrogen peroxide and a persulfate are used in combination as the initiator, the addition ratio of hydrogen peroxide and the persulfate in mass ratio is, when the mass of hydrogen peroxide is 1, the mass of the persulfate is preferably 0.1 to 5.0, and more preferably 0.2 to 2.0. If the mass ratio of the persulfate is smaller than 0.1, the weight average molecular weight of the obtained copolymer tends to be high. On the other hand, if the mass ratio of the persulfate is higher 5.0, the advantageous effect of reduction in molecular weight by the addition of the persulfate cannot be obtained associated with the addition, and the persulfate is wastefully consumed in the polymerization reaction system.

As a method for adding the polymerization initiator, a method of adding a large portion thereof before initiating polymerization is preferable. With respect to the total used amount, a large portion refers to not smaller than 70 mass%, further preferably not smaller than 80 mass%, particularly preferably not smaller than 90 mass%, and most preferably 100 mass%. When the initiator is to be added after polymerization, continuous input methods such as dripping and separate inputting can be used. However, when hydrogen peroxide and another initiator are to be used in combination, the entire amount of hydrogen peroxide may be added after polymerization has been initiated.

For the method of the present invention, the added amount of the chain transfer agent is not limited as long as the amount allows the monomers to be polymerized finely, and is, with respect to 1 mol of the total monomer component consisting of the monomers (entire amount of the used monomers), preferably 1 to 20 g, and more preferably 2 to 15 g. If the amount is less than 1 g, it may not be possible to control the molecular weight; and on the other hand, if the amount is more than 20 g, impurities are generated in large quantity and pure portions of the polymer may be reduced. In particular, when a sulfite is used, excessive sulfite is decomposed within the reaction system, and sulfurous acid gas may be generated. In addition, it may also be disadvantageous economically.

As a combination of the initiator and the chain transfer agent, it is most preferable to use at least one type of each the persulfate and the sulfite. In this case, the mixing ratio of the persulfate and the sulfite is not particularly limited, and, with respect to 1 part by mass of the persulfate, 0.5 to 5 parts by mass of the sulfite is preferably used. More preferably, with respect to 1 part by mass of the persulfate, the lower limit of the sulfite is 1 part by mass, and most preferably 2 parts by mass. Furthermore, with respect to 1 part by mass of the persulfate, the upper limit of the sulfite is preferably 4 parts by mass, and most preferably 3 parts by mass. Here, if the sulfite is contained by less than 0.5 parts by mass, the total amount of the initiator may increase when reducing the molecular weight of the copolymer, and, on the other hand, if it is more than 5 parts by mass, side reactions increases and resulting impurities may increase.

With respect to 1 mol of the total monomer components consisting of the monomers (entire amount of the used monomers), the total used amount of the chain transfer agent, the initiator, and the reaction accelerator is preferably 2

to 20 g. When the total used amount of those is within this range, the 2-methylene glutaric acid copolymer of the present invention can be efficiently produced, and a desired molecular weight distribution of the 2-methylene glutaric acid copolymer can be obtained. The range is more preferably 4 to 18 g, and further preferably 6 to 15 g.

As a method for adding the chain transfer agent to the reaction container, a method of adding a large portion thereof before initiating polymerization is preferable. With respect to the total used amount, a large portion refers to not smaller than 70 mass%, further preferably not smaller than 80 mass%, particularly preferably not smaller than 90 mass%, and most preferably 100 mass%. When the chain transfer agent is to be added after polymerization, continuous input methods such as dripping and separate inputting can be used. Furthermore, the chain transfer agent may be introduced to the reaction container by itself, or may be pre-mixed with each of the monomers constituting the monomer components, solvent, etc.

<Polymerization Solvent>

For the present invention, it is preferable to use a solvent for the polymerization of the monomers, and, in the used solvent, water is preferably used by not less than 50 mass%, more preferably by not less than 80 mass%, and further preferably by 100 mass%. By using water by not less than 50 mass% of the used solvent, the amount of organic solvents used in polymerization can be reduced and thereby there is an advantage of allowing easy removal of organic solvents through distillation after the end of the polymerization.

There is no particular limitation in the solvent that is to be used in the above described modes, as long as the solvent can dissolve or disperse 2-methylene glutaric acid or a salt thereof. From a standpoint of improving solubility of the monomers used in the polymerization to the solvent, an organic solvent may be added as necessary. Also in this case, the contained amount of water in the total mixed solvent is not less than 50 mass%. The organic solvents that can be used in this case include: lower alcohols such as methanol, ethanol, and isopropyl alcohol; lower ketones such as acetone, methyl ethyl ketone, and diethyl ketone; ethers such as dimethyl ether and dioxane; and amides such as dimethyl formaldehyde. With regard to these solvents, a single type may be used by itself, or a form of a mixture of two or more types may be used. When adding the above described organic solvent, it is preferable to use water and one or more solvents selected from a group consisting of lower alcohols having a carbon number of 1 to 4, from a point of solubility of the monomer components and the obtained copolymer.

The usage amount of the solvent such as water is preferably 40 to 200 mass% with respect to 100 mass% of the monomer components. The usage amount is more preferably not smaller than 45 mass%, and further preferably not smaller than 50 mass%. In addition, the usage amount is preferably not larger than 180 mass%, and further preferably not larger than 150 mass%. If the usage amount of the solvent is smaller than 40 mass%, the molecular weight of the obtained copolymer may become high, and if the usage amount is larger than 200 mass%, the concentration of the obtained copolymer becomes low and it may become necessary to remove the solvent. As a method for adding the solvent to the reaction container, a method of adding a large portion thereof before initiating polymerization is preferable. With respect to the total used amount, a large portion refers to not smaller than 70 mass%, further preferably not smaller than 80 mass%, particularly preferably not smaller than 90 mass%, and most preferably 100 mass%. When the solvent is to be added after polymerization, continuous input methods such as dripping and separate inputting can be used. Furthermore, the solvent may be introduced to the reaction container by itself, or may be pre-mixed with each of the monomers constituting the monomer components, solvent, etc.

For the above described copolymerization method, copolymerization conditions such as the copolymerization temperature etc., are determined as appropriate in accordance with the used copolymerization method, solvent, and polymerization initiator. Ordinarily, the copolymerization temperature is preferably equal to or higher than 0°C, and is preferably equal to or lower than 150°C. The copolymerization temperature is more preferably equal to or higher than 40°C, further preferably equal to or higher than 60°C, and particularly preferably equal to or higher than 80°C. In addition, the copolymerization temperature is preferably equal to or lower than 120°C, and further preferably equal to or lower than 110°C. Particularly when using the sulfurous acid (salt), the copolymerization temperature is ordinarily 60°C to 95°C, preferably 70°C to 95°C, and further preferably 80°C to 95°C. In this case, if the copolymerization temperature is lower than 60°C, impurities derived from the sulfurous acid (salt) may be generated in large quantity. On the other hand, if the copolymerization temperature is higher than 95°C, sulfurous acid gas that is toxic may be released.

The copolymerization temperature does not necessary have to be consistently maintained at a constant during the polymerization reaction. For example, the polymerization may be initiated at room temperature, and the temperature may be increased to a preset temperature at an appropriate heating rate or within an appropriate heating time so as to be maintained at the preset temperature. Alternatively, the temperature may be temporally changed (increased or decreased) during the polymerization reaction in accordance with the dripping method of the monomer components, initiator, etc.

<Polymerization Time, Polymerization Pressure, Polymerization pH>

There is no particular limitation in the polymerization time. As described above, the most preferable is a method of adding the monomers before initiating polymerization. However, when a method of adding the monomers after initiating the polymerization is adopted, the time for adding the monomers is preferably 30 to 420 minutes, more preferably 45 to 390 minutes, further preferably 60 to 360 minutes, and particularly preferably 90 to 300 minutes. It should be noted that, in the present invention, unless particularly mentioned otherwise, "polymerization time" refers to time during which the monomers are added.

The pressure inside a reaction system for the above described copolymerization method may be any of ordinary pressure (atmospheric pressure), reduced pressure, and increased pressure; however, from a point of the molecular weight of the obtained copolymer, the copolymerization is preferably conducted under ordinary pressure, or under increased pressure obtained by sealing the reaction system. Furthermore, from a point of equipment such as a pressure increasing device, a pressure reducing device, pressure resistive reaction container and piping, etc.; the copolymerization is preferably conducted under ordinary pressure (atmospheric pressure). The atmosphere inside the reaction system may be air atmosphere; however, inert atmosphere is preferable. For example, it is preferable to substitute inside of the system with an inert gas such as nitrogen before initiating polymerization.

The pH for the polymerization for the copolymerization is preferably acidic. In particular, when the persulfate and the bisulfite are used in combination as the initiator, the polymerization is preferably conducted under an acidic condition. When the polymerization is conducted under an acidic condition, it is possible to suppress an increase in the viscosity of the aqueous solution in the polymerization reaction system, and the copolymer can be produced finely. In addition, since the polymerization reaction can be advanced at high concentrations, it is possible to significantly increase production efficiency, conduct a high-concentration polymerization in which the final solid concentration is 40% or higher, and obtain a copolymer whose total concentration of included residual monomers is equal to or smaller than 30000 ppm. In addition, polymerizability of 2-methylene glutaric acid can be improved.

As the acidic condition, the pH in the reaction solution during polymerization at 25°C is preferably 1 to 6. The pH is more preferably equal to or lower than 5, and further preferably equal to or lower than 3. Although the copolymer obtained by the above described copolymerization method can be directly used as a main component of a fiber treatment agent, if necessary, the copolymer may be further neutralized with an alkaline substance for use. Alkaline substances that are preferable for use include: mineral salts such as hydroxides, chlorides, and carbonates of monovalent metals and divalent metals; ammonia; and organic ammonium (organic amine).

A neutralization rate for conducting the copolymerization may be changed as appropriate depending on the initiator. For example, when the persulfate and the bisulfite are used in combination, the copolymerization of the monomer components is preferably conducted so as the neutralization rate of the monomers is 0 to 60 mol% with respect to the total amount of acid groups in an acid group including monomer such as the unsaturated carboxylic acid monomer. The neutralization rate of the monomers is represented by the mol% of monomers forming a salt when the total number of moles of the monomers is defined as 100 mol%. If the neutralization rate of the monomers is larger than 60 mol%, a rate of polymerization in the copolymerization process cannot be increased, and the molecular weight of the obtained copolymer may decrease and production efficiency may deteriorate. The neutralization rate is more preferably equal or smaller than 50 mol%, further preferably equal or smaller than 40 mol%, particularly preferably equal or smaller than 30 mol%, more particularly preferably equal or smaller than 20 mol%, and most preferably equal or smaller than 10 mol%.

Furthermore, when the persulfate and hydrogen peroxide are used in combination, the degree of neutralization with respect to the total amount of acid groups in an acid group including monomer which is the unsaturated carboxylic acid monomer is equal or smaller than 99 mol%, and preferably 50 to 95 mol%. If the degree of neutralization is smaller than 50 mol%, decomposition of hydrogen peroxide does not occur sufficiently, and the weight average molecular weight tends to increase. Furthermore, if the degree of neutralization is larger than 99 mol%, it results in a strong alkaline corrosive condition and corrosion may occur on production facilities at high temperatures, and the added amount of hydrogen peroxide may become large since it is decomposed by an alkali. After the end of polymerization (i.e., after the end of dripping the monomer), in order to enhance decomposition of residual hydrogen peroxide, the degree of neutralization is preferably equal to or larger than 80 mol% with respect to the total amount of acids in the unsaturated carboxylic acid monomer and the 2-methylene glutaric acid monomer, more preferably equal to or larger than 90 mol%, and further preferably equal to or larger than 95 mol%.

[2-Methylene Glutaric Acid Based Polymer Composition (Polymer Composition)]

The 2-methylene glutaric acid based polymer of the present invention is included in the polymer composition of the present invention as an essential component. Other components that may be also included are unreacted 2-methylene glutaric acid monomers, unsaturated carboxylic acid monomers, unreacted polymerization initiator, polymerization initiator decomposition products, etc.

The contained amount of unreacted monomers existing the polymer composition is, although it may differ depending on the type of monomer that is used, preferably less than 1 mass% with respect to 100 mass% of solid contents of the polymer composition. The contained amount is more preferably less than 0.5%, and further preferably less than 0.1%.

Although there is no particular limitation in the polymer composition of the present invention, from a standpoint of production efficiency, the polymer composition is preferably obtained without a purification step such as removal of impurities. In addition, after the polymerization process, a composition obtained by diluting the obtained polymerization composition with a small amount (about 1 to 400 mass% with respect to the obtained mixture) of water to increase handleability is also included in the polymer composition of the present application.

Other than the 2-methylene glutaric acid based polymer of the present invention, solvents such as water may be included in the polymer composition of the present invention (referred to as 2-methylene glutaric acid copolymer (water) solution). In such a case, the contained amount of water with respect to 100 mass% of the polymer composition is preferably about 30 to 99 mass%, and more preferably about 35 to 70 mass%.

The copolymer and the polymer composition of the present invention (also referred to as the polymer of the present invention, and the polymer composition of the present invention, respectively) can be used as a fiber treatment agent, a water treatment agent, a dispersant, a detergent builder (or a detergent composition), etc. When used as a detergent builder, it can be added to detergents used for various applications such as for garments, for tableware, for residences, for hair, for the bodies, for tooth brushing, and for automobiles.

<Fiber Treatment Agent>

The polymer (composition) of the present invention can be used as a fiber treatment agent. The fiber treatment agent contains the copolymer or the polymer composition of the present invention, and at least one selected from the group consisting of staining agents, peroxides, and surfactants.

With respect to the entire fiber treatment agent, the contained amount of the polymer of the present invention in the fiber treatment agent is preferably 1 to 100 mass%, and more preferably 5 to 100 mass%. Furthermore, an appropriate water-soluble polymer may be optionally included as long as it does not adversely affect the performance and advantageous effects of the fiber treatment agent.

In the following, a blend example of a fiber treatment agent more close to the embodiments will be provided. This fiber treatment agent can be used in processes of fiber treatment such as refining, staining, bleaching, and soaping. The staining agents, the peroxides, and the surfactants include those commonly used in a fiber treatment agent.

With regard to the blend ratio of the polymer of the present invention and at least one selected from the group consisting of staining agents, peroxides, and surfactants for improving degree of whiteness, color unevenness, and staining fastness; for example, a composition preferably used as the fiber treatment agent has the at least one selected from the group consisting of staining agents, peroxides, and surfactants blended in at a proportion of, in fiber treatment agent pure part equivalent, 0.1 to 100 parts by mass with respect to 1 part by mass of the polymer of the present invention.

An arbitrary fiber can be appropriately selected as a fiber on which the fiber treatment agent is to be used. Examples thereof include: cellulosic fibers such as cotton and hemp; chemical fibers such as nylon and polyester; animal fibers such as wool and silk threads; semi-synthetic fibers such as rayon; and textiles and blends thereof.

When the fiber treatment agent is applied in a refining process, it is preferable to blend the polymer of the present invention together with an alkaline chemical and a surfactant. When the fiber treatment agent is applied in a bleaching process, it is preferable to blend the polymer composition of the present invention and a peroxide. It is also possible to blend therein a silicic acid based agent such as sodium silicate as a decomposition inhibitor for an alkaline bleaching agent. Since the copolymer of the present application has excellent heavy metal chelating ability, abnormal decomposition of peroxides can be suppressed. Furthermore, since the copolymer has an advantageous effect of suppressing deposition of silica scales, the bleaching effect can be improved. Furthermore, since the copolymer has excellent capturing ability of calcium and the like, a fiber can be finished with fine aesthetic properties.

<Water Treatment Agent>

The polymer (composition) of the present invention can be used as a water treatment agent. If necessary, for the water treatment agent, other compounding agents such as polymerized phosphates, phosphonates, anticorrosives, slime control agents, and chelating agents may be used.

The water treatment agent is useful for scale prevention in cooling-water circulating systems, boiler-water-circulation systems, seawater desalination devices, pulp digestion kettles, black liquor condensing kettles, etc. Furthermore, an appropriate water-soluble polymer may be optionally included as long as it does not adversely affect the performance and advantageous effects of the water treatment agent.

<Pigment Dispersant>

The polymer (composition) of the present invention can be used as a pigment dispersant.

Although the polymer of the present invention can be used as a pigment dispersant by itself; solvents such as water, and other compounding agents such as condensed phosphoric acid and a salt thereof, phosphonic acid and a salt thereof, and polyvinyl alcohol may also be used in the pigment dispersant of the present invention as necessary.

With respect to the entire pigment dispersant, the contained amount of the polymer of the present invention in the pigment dispersant is preferably 0.5 to 10 mass%. Furthermore, an appropriate water-soluble polymer may be optionally included as long as it does not adversely affect the performance and advantageous effects of the pigment dispersant.

With the present invention, it is possible to provide a high concentration pigment slurry for paper manufacturing that has low viscosity and temporal-stability of viscosity. Then, when the slurry is used for coating, it becomes possible to provide a coated paper for printing, which suppresses coating defects, has excellent base paper coverability, printing gloss, anti-blistering ability, and a sensation of an even printing surface, and has significant points in terms of the degree of whiteness, opacity, and ink receptivity that are inherent to the pigment.

There is no particular limitation in the pigment used in the present invention, and examples thereof include kaolin, clay, heavy calcium carbonate, light calcium carbonate, titanium dioxide, satin white, talc, aluminium hydroxide, plastic pigments, etc.

In the present invention, for a method for preparing the pigment, hitherto known methods may be appropriately referred to, or may be combined; and an example of that includes a method of conducting a primary dispersion and then conducting a wet grinding process. This method is suitable since a high concentration pigment slurry having low viscosity and excellent dispersion stability can be obtained. Needless to say that the method for preparing the pigment of the present invention is not limited to this wet grinding method, and an preparing method without a wet grinding process may also be used. In the above described preparing method for the pigment, there is no particular limitation in the method for conducting the primary dispersion, and mixing is preferably conducted with a mixer. Examples of the mixer that can be suitably used include, for example, those having high shearing force such as high-speed dispersion devices, homogenization mixers, ball mills, Cowles mixers, and agitation type dispersion devices.

In the wet grinding process, the polymer of the present invention may be loaded in a grinder to be grinded. In such a case, the polymer of the present invention also plays a role as a grinding aid.

A mean particle diameter of the pigment included in the slurry is preferably equal to or smaller than 1.5 μm, and more preferably equal to or smaller than 1.0 μm. It should be noted that the mean particle diameter mentioned here is a particle diameter measured using a laser particle-size-distribution meter such as that used in Examples described later. Furthermore, particles with the desired particle diameter consist preferably 93% or higher, and more preferably 95% or higher.

When the above described pigment dispersant is used as a dispersant of the pigment, the usage amount of the pigment dispersant is preferably 0.05 to 2.0 parts by mass with respect to 100 parts by mass of pigment. When the usage amount of the pigment dispersant is within the above described range, it becomes possibly to obtain a sufficient dispersion effect and obtain an advantageous effect worthy of the added amount, and becomes economically advantageous.

The solid content concentration of the pigment slurry of the present invention is preferably not smaller than 65 mass%.

The viscosity of the pigment slurry is not particularly limited, and is preferably equal to or lower than 1000 mPa·s, and more preferably equal to or lower than 600 mPa·s. When the viscosity is larger than 1000 mPa·s, if a coating slip prepared using the slurry as a main body thereof is applied at high speed while being subjected to high shearing force, coating defects such as streaks, bleeding, and stalagmites can easily occur, and an excellent feeling of a coated paper surface may not be obtained.

It should be noted that the viscosity of the pigment slurry refers to a value measured using a B-type viscometer with measuring conditions of: rotor No. 3, 60 rpm, and 1 minute.

<Detergent Composition>

The polymer (composition) of the present invention may be added to the detergent composition. There is no particular limitation in the contained amount of the polymer of the present invention in the detergent composition. However, from a standpoint of exerting excellent builder performance, the contained amount of the polymer of the present invention with respect to the entire amount of the detergent composition is preferably 0.1 to 15 mass%, more preferably 0.3 to 10 mass%, and further preferably 0.5 to 5 mass%.

Surfactants and additives used for a detergent are ordinarily included in the detergent composition used for a detergent application. The specific form of such surfactants and additives are not particularly limited, and knowledge

available in the detergent field may be referred to as appropriate. Furthermore, the above described detergent composition may be a powder detergent composition or a liquid detergent composition.

The surfactant is one or more types selected from the group consisting of anionic surfactants, nonionic surfactants, cationic surfactants, and amphoteric surfactants. When two or more surfactants are to be used in combination, the total amount of anionic surfactants and nonionic surfactants with respect to the total amount of surfactants is preferably not smaller than 50 mass%, more preferably not smaller than 60 mass%, further preferably not smaller than 70 mass%, and particularly preferably not smaller than 80 mass%.

Suitable anionic surfactants include alkylbenzene sulfonates, alkyl ether sulfates, alkenyl ether sulfates, alkyl sulfates, alkenyl sulfates, α-olefin sulfonates, α-sulfo fatty acids or ester salts thereof, alkane sulfonates, saturated fatty acid salts, unsaturated fatty acid salts, alkyl ether carboxylates, alkenyl ether carboxylates, amino acid type surfactants, N-acylamino acid type surfactants, alkyl phosphate esters or salts thereof, and alkenyl phosphate esters or salts thereof. The alkyl group or alkenyl group in these anionic surfactants may have a branch of an alkyl group such as methyl group.

Suitable nonionic surfactants include polyoxyalkylene alkyl ethers, polyoxyalkylene alkenyl ethers, polyoxyethylene alkylphenyl ethers, higher fatty acid alkanolamides and alkylene oxide adducts thereof, sucrose fatty acid esters, alkyl glucosides, fatty acid glycerol monoesters, and alkylamine oxides. The alkyl group or alkenyl group in these nonionic surfactants may have a branch of an alkyl group such as methyl group.

Suitable cationic surfactants include quarternary ammonium salts and the like. Furthermore, suitable amphoteric surfactants include carboxyl type amphoteric surfactants and sulfobetaine type amphoteric surfactants. The alkyl group or alkenyl group in these cationic surfactants and amphoteric surfactants may have a branch of an alkyl group such as methyl group.

With respect to the entire amount of the detergent composition, a blending ratio of the above described surfactants is ordinarily 10 to 60 mass%, preferably 15 to 50 mass%, further preferably 20 to 45 mass%, and particularly preferably 25 to 40 mass%. If the blending ratio of the surfactants is too small, sufficient detergency may not be exerted, and if the blending ratio of the surfactants is too large, economic efficiency may decrease.

Suitable additives include: antiredeposition agents for preventing redeposition of pollutants, such as alkali builders, chelate builders, and carboxymethyl cellulose sodium; taint inhibitors such as benzotriazole and ethylenethiourea; soil release agents; color transfer inhibitors; softening agents; alkaline substances for controlling pH; fragrances; solubilizing agents; fluorescence agents; coloring agents; foaming agents; foam stabilizers; lustering agents; germicides; bleaching agents; bleaching assistants; enzymes; dyes; and solvents. Furthermore, when the powder detergent composition is used, it is preferable to blend zeolite therein.

The detergent composition may also contain other detergent builders in addition to the polymer (composition) of the present invention. Examples of the other detergent builders include, but not particularly limited to, alkali builders such as carbonates, bicarbonate, and silicates, tripolyphosphates, pyrophosphates, Glauber's salt, nitrilotriacetates, ethylenediaminetetraacetates, citrates, copolymer salts of (meth)acrylic acid, acrylic acid-maleic acid copolymers, fumarates, chelate builders such as zeolite, and carboxyl derivatives of polysaccharides such as carboxymethyl cellulose. Pairing salts used for the above described builder include alkali metals such as sodium and potassium, ammonium, and amines.

Ordinarily, a total blending ratio of the additives and other builders for detergents is preferably 0.1 to 50 mass% with respect to 100 mass% of the detergent composition. It is more preferably 0.2 to 40 mass%, further preferably 0.3 to 35 mass%, particularly preferably 0.4 to 30 mass%, and most preferably 0.5 to 20 mass%. If the blending ratio of the additives / other detergent builders is smaller than 0.1 mass%, sufficient detergent performance may not be exerted, and if it is larger than 50 mass%, economic efficiency may be decreased.

It should be noted that the concept of the detergent composition includes synthetic detergents of household detergents, industrial detergents and hard surface cleaning agents for fiber and other industries, and also detergents used for a specific usage such as bleaching detergents, in which a single function of its component is enhanced.

When the detergent composition is the liquid detergent composition, ordinarily, the moisture content included in the liquid detergent composition is preferably 0.1 to 75 mass% with respect to the entire amount of the liquid detergent composition, more preferably 0.2 to 70 mass%, further preferably 0.5 to 65 mass%, further more preferably 0.7 to 60 mass%, particularly preferably 1 to 55 mass%, and most preferably 1.5 to 50 mass%.

When the detergent composition is the liquid detergent composition, a kaolin turbidity of the detergent composition is preferably equal to or smaller than 200 mg/L, more preferable equal to or smaller than 150 mg/L, further preferably equal to or smaller than 120 mg/L, particularly preferably equal to or smaller than 100 mg/L, and most preferably equal to or smaller than 50 mg/L.

Furthermore, a shift (difference) in kaolin turbidity when the polymer (composition) of the present invention is or is not added to the liquid detergent composition as a detergent builder is preferably equal to or smaller than 500 mg/L, more preferably equal to or smaller than 400 mg/L, further preferably equal to or smaller than 300 mg/L, particularly preferably equal to or smaller than 200 mg/L, and most preferably equal to or smaller than 100 mg/L. A value measured by the following method is used as the value of kaolin turbidity.

<Method for Measuring Kaolin Turbidity>

A sample (liquid detergent) that has been homogeneously agitated is loaded in a 50 mm square cell having a thickness of 10 mm, air bubbles are removed therefrom, and Turbidity (kaolin turbidity: mg/L) is measured at 25°C using the NDH2000 (product name, turbidity meter) manufactured by Nippon Denshoku Industries Co., Ltd.

Suitable enzymes that can be blended in the detergent composition include proteases, lipases, and cellulases. Among those, proteases, alkaline lipases, and alkaline cellulases having high activities in alkaline cleaning solutions are preferable.

The added amount of the above described enzyme is preferably not larger than 5 mass% with respect to 100 mass% of the detergent composition. If the added amount is larger than 5 mass%, improvement in detergency cannot be observed and economic efficiency may decrease.

The detergent composition has excellent cleaning effect with less salt deposition even when used in a region with hard water having high concentrations of calcium ion and magnesium ion (e.g., equal to or higher than 100 mg/L). This advantageous effect is particularly significant when the detergent composition contains an anionic surfactant such as LAS.

Examples

In the following, the present invention will be described in further detail using Examples, however, the present invention is not limited only to these Examples. It should be noted that, unless particularly mentioned otherwise, "parts" means "parts by mass" and "%" means "mass%".

Furthermore, methods described below were used to measure the weight average molecular weight, the number average molecular weight, and the resoiling prevention ability of the 2-methylene glutaric acid copolymer of the present invention, the quantity of unreacted monomer, and the amount of solid content in the polymer composition and polymer aqueous solution.

<Measuring Condition of Weight Average Molecular Weight and Number Average Molecular Weight (GPC)>

Weight average molecular weight and number average molecular weight are measured using the following device.

Measuring device: Manufactured by Hitachi, Ltd.
Detector: Hitachi RI Detector L-2490
Column: TSK-GEL G3000PWXL manufactured by Tosoh Corp.; two columns arranged in series
Column temperature: 35°C
Flow rate: 0.5 mL/min
Standard curve: POLY SODIUM ACRYLATE STANDARD from Sowa Science Corp.
Eluent: A solution obtained by diluting a mixture of disodium hydrogen phosphate dodecahydrate / sodium dihydrogen phosphate dihydrate (34.5 g / 46.2 g) in pure water to be 5000 g.

<Solid Content Measuring Method for Polymer Composition and Polymer Aqueous Solution>

Under a nitrogen atmosphere, a polymer composition (polymer composition 1.0 g + water 3.0 g) is kept for 1 hour in an oven heated to 170°C to be dried. From a mass change before and after the drying, solid content (%) and volatile component (%) are calculated.

<Measurement of Monomers etc., in Polymer Composition>

Measurement is performed using liquid chromatography with the following measuring conditions.

Detection device: UV detector L-2400H (detection wavelength 214 nm) manufactured by Hitachi, Ltd.
Column: TSK-GEL G3000PWXL manufactured by Tosoh Corp.; two columns arranged in series Temperature: 35°C
Eluent: A solution obtained by diluting a mixture of disodium hydrogen phosphate dodecahydrate / sodium dihydrogen phosphate dihydrate (34.5 g / 46.2 g) in pure water to be 5000 g.
Measuring time: 60 min/sample (dissolution rate: 0.5 mL/min)

<Hydrogen Peroxide Stabilizing Ability>

To prepare a test solution, 1 mL of a 0.0703% Mohr's salt aqueous solution, 4 mL of a 5% polymer aqueous solution, 80 g of pure water, 10 mL of a 0.1% magnesium sulfate heptahydrate aqueous solution, 2 g of a 48% sodium hydroxide aqueous solution, and 3 mL of a 35% hydrogen peroxide aqueous solution are sequentially added in this order to a 250 mL plastic bottle having a pinhole opened on its inner lid.

The test solution is left still at 50°C for 2 hours, and hydrogen peroxide concentration (x (%)) in the solution is measured with redox titration. A hydrogen peroxide stabilizing ability is calculated using the obtained hydrogen peroxide concentration and the following formula.

$$\text{Hydrogen peroxide stabilizing ability (\%)} = x/1.05 \times 100$$

<Calcium Ion Capturing Ability>

(i) Preparation of Calcium Ion Standard Aqueous Solutions (Standard Curve Aqueous Solutions)

To obtain calcium ion standard aqueous solutions (standard curve solutions), 50 mL aqueous solutions containing $Ca^{2+}$ions by 0.01 mol/l, 0.001 mol/l, and 0.0001 mol/l are prepared using calcium chloride dihydrate, pH of the aqueous solutions are adjusted to 9 to 11 using a 4.8% sodium hydroxide aqueous solution, and then 1 mL of a 4 mol/l aqueous solution of potassium chloride is added to each of the solutions.

(ii) Preparation of Aqueous Solutions with Measuring Samples

10 mg of a polymer (adjusted to pH 7) in solid content equivalent is weighed in a 100 mL beaker, and 50 mL of a 0.001 mol/l calcium ion aqueous solution prepared using sodium chloride dihydrate is added to the beaker. After the mixture is homogeneously agitated using a stirrer, the pH of the mixture is adjusted to 9 to 11 using a 4.8% sodium hydroxide aqueous solution, and 1 mL of a 4 mol/l aqueous solution of potassium chloride is added thereto to prepare an aqueous solution of a measuring sample.

(iii) Measurement of Calcium Ion Capturing Ability

An amount of calcium ion is measured with a calcium ion electrode 93-20 manufactured by Orion Co., Ltd., using an ionic analyzer EA920 manufactured by Orion Co., Ltd., and an amount of calcium ion captured by the sample is obtained from the standard curve and a measured value of the sample (polymer). A captured amount per 1 g of the polymer solid content is represented as number of mg in calcium carbonate equivalent, and the value is used as a calcium ion capturing ability value.

<Antigelation Property>

Antigelation property test was conducted in accordance with the following procedures.

(i) Preparation of Glycine Buffer

A glycine buffer is prepared by adding pure water to 67.56 g of glycine and 52.60 g of sodium chloride to obtain 600.0 g. The pH of the mixture is adjusted to 10.0 using sodium hydroxide.

(ii) Preparation of Dilute Glycine Buffer

Pure water is added to 54.0 g of the above described glycine buffer to obtain 1 kg of a dilute glycine buffer.

(iii) Preparation of Sample Aqueous Solutions

A sample aqueous solution is prepared by adding 80.0 g of the dilute glycine buffer and 2.50 g of a 1.0% polymer aqueous solution in solid content equivalent to a 100 mL beaker.

(iv) Preparation of Hard Water

Pure water is added to 14.7 g of calcium chloride dihydrate to prepare 100 mL of hard water.

(v) Calculation of Antigelation Property

Using an automatic titrator, the hard water is intermittently dripped in the sample aqueous solution at a speed of 0.025 mL / seconds, and turbidity of the aqueous solution is measured using a luminous-intensity electrode. A titer when unclearness is generated in the aqueous solution is read. Antigelation property is calculated from the obtained titer using the following formula. It should be noted that the antigelation property is better when the numerical value is higher.

$$\text{Antigelation property} = (\text{titer (mL)} \times 0.10) / (2.50 \times 0.01) \times 100$$

<Example 1>

194.0 g of pure water and 15.0 g (0.10mol) of 2-methylene glutaric acid (hereinafter, referred to as MGA) were loaded in a glass separable flask having a capacity of 500 mL and equipped with a reflux condenser and an agitator; and the mixture was heated to 90°C under agitation for dissolution. Here, 8.0 g (0.09 mol) of 80 mass% acrylic acid aqueous solution (hereinafter, referred to as 80% AA), 0.005 g of Mohr's salt (3 ppm in terms of the mass of iron(II) with respect to the total load amount (here, the total load amount refers to the total input mass including those in a neutralization process after the polymerization was completed; and the same applies hereinafter)), and 3.9 g of a 15% sodium persulfate aqueous solution (hereinafter abbreviated as 15% NaPS) were added. The mixture was gently agitated, and then left still for 1 hour at 90°C. After 1 hour, 0.3 g of sodium persulfate (NaPS) was additionally added, and the mixture was further maintained at 90°C for 1 hour for maturation to complete the polymerization. After the completion of the polymerization and after the reaction solution was radiationally cooled, 22.0 g of a 48% sodium hydroxide aqueous solution (hereinafter, referred to as 48% NaOH) was slowly dripped in the reaction solution under agitation to neutralize the solution. In such manner, a polymer composition (1) having a solid content concentration of 10.8 mass% and including a polymer (polymer (1)) with a final neutralization degree of 90 mol% was obtained.

Residual MGA and residual AA were each equal to or less than 100 ppm with respect to the polymer composition (1).

The polymerization formulation was compiled in the following Table 1.

<Examples 2 to 6>

Except for changing the conditions shown in Table 1 for Example 1, polymers (polymers (2) to (6)) were obtained similarly to Example 1.

In the polymer compositions (2) to (6), residual MGA and residual AA were each equal to or less than 100 ppm with respect to respective polymer compositions.

[Table 1]

| Example | | 1 | 2 | 3 | 4 | 5 | 6 |
|---|---|---|---|---|---|---|---|
| Polymer | | (1) | (2) | (3) | (4) | (5) | (6) |
| MGA/AA | (mass ratio) | 70/30 | 70/30 | 70/30 | 50/50 | 50/50 | 50/50 |
| Initial load | | | | | | | |
| MGA | (g) | 15.0 | 25.0 | 30.0 | 6.0 | 10.0 | 30.0 |
| | (mol) | 0.10 | 0.17 | 0.21 | 0.04 | 0.07 | 0.21 |
| Pure water | (g) | 194.0 | 200.0 | 56.2 | 230.0 | 180.0 | 74.8 |
| Initial load after dissolving MGA | | | | | | | |
| Mohr's salt | (g) | 0.005 | 0.006 | 0.003 | 0.005 | 0.005 | 0.005 |
| | (ppm) | 3 | 3 | 3 | 3 | 3 | 3 |
| 80% AA | (g) | 8.0 | 13.4 | 16.1 | 7.5 | 12.5 | 37.5 |
| | (mol) | 0.09 | 0.15 | 0.18 | 0.08 | 0.14 | 0.42 |

(continued)

| Example | | 1 | 2 | 3 | 4 | 5 | 6 |
|---|---|---|---|---|---|---|---|
| 15% NAPS | (g)<br>(g/mol) | 3.9<br>3 | 6.4<br>3 | 7.7<br>3 | 2.5<br>3 | 4.2<br>3 | 12.5<br>3 |
| Reaction temperature<br>Maturation time | (°C)<br>(min) | 90<br>60 | 90<br>60 | 60<br>60 | 90<br>60 | 90<br>60 | 60<br>60 |
| Polymerization concentration | (mass%) | 10 | 15 | 40 | 5 | 10 | 40 |
| Post-processing<br>NaPS<br>48% NaOH<br>Degree of neutralization<br>Loaded solid content | <br>(g)<br>(g)<br>(%)<br>(mass%) | <br>0.3<br>22.0<br>90<br>10.8 | <br>0.5<br>37.0<br>90<br>15.5 | <br>0.6<br>45.0<br>90<br>33.9 | <br>0.2<br>13.0<br>90<br>4.8 | <br>0.3<br>21.0<br>90<br>9.1 | <br>1.0<br>63.0<br>90<br>28.4 |
| Total load | (g) | 244 | 283 | 155 | 259 | 228 | 218 |

<Example 7>

41.0 g of pure water was loaded in a glass separable flask having a capacity of 300 mL and equipped with a reflux condenser and an agitator, and was heated to 90°C under agitation (initial load).

Next, under agitation, a mixed solution containing 17.5 g (0.19 mol) of 80% AA, 6.0 g (0.042 mol) of MGA, and 24.0 g of pure water, and 14.2 g of 5% NaPS were each dripped in a polymerization reaction system constantly maintained at 90°C, using separate dripping nozzles. The respective dripping times were 60 minutes for the mixed solution of 17.5 g of 80% AA, 6.0 g of MGA, and pure water, and 65 minutes for 5% NaPS. It should be noted that the dripping all started simultaneously. Furthermore, during the respective dripping times, a drip rate of each component was constant and dripping was conducted continuously.

After the end of the dripping, the reaction solution was further maintained at 90°C over 30 minutes for maturation to complete the polymerization. After the completion of the polymerization and after the reaction solution was radiationally cooled, 15.5 g (i.e., 0.19 mol) of 48% NaOH was slowly dripped in the reaction solution under agitation to neutralize the solution. In such manner, a polymer composition (7) having a solid content concentration of 19 mass% and including a copolymer (polymer (7)) with a final neutralization degree of 67 mol% was obtained. The polymerization formulation was compiled in the following Table 2.

[Table 2]

| Example | | 7 |
|---|---|---|
| Polymer | | (7) |
| MGA/AA | (mass ratio) | 30/70 |
| Initial load<br>Mohr's salt<br><br>MGA<br><br>Pure water | <br>(g)<br>(ppm)<br>(g)<br>(mol)<br>(g) | <br>0<br>0<br>0<br>0<br>41.0 |
| Drip<br>80% AA<br><br>MGA<br><br>5% NaPS<br><br>Pure water | <br>(g)<br>(mol)<br>(g)<br>(mol)<br>(g)<br>(g/mol)<br>(g) | <br>17.5<br>0.19<br>6.0<br>0.04<br>14.2<br>3<br>24.0 |
| Dripping time | | |

(continued)

| Example | | 7 |
|---|---|---|
| 80% AA | (min) | 0-60 |
| MGA | (min) | 0-60 |
| 5% NaPS | (min) | 0-65 |
| 35%$H_2O_2$ | (min) | - |
| Pure water | (min) | 0-60 |
| Reaction temperature | (°C) | 90 |
| Maturation time | (min) | 30 |
| Polymerization neutralization degree | (%) | 0 |
| Polymerization concentration | (mass%) | 26.1 |
| Post-processing | | |
| 48% NaOH | (g) | 15.5 |
| | (mol) | 0.19 |
| Final neutralization degree | (%) | 67.1 |
| Final solid content | (mass%) | 19.2 |
| Total load | (g) | 118.2 |

<Example 8>

29.0 g of pure water was loaded in a glass separable flask having a capacity of 300 mL and equipped with a reflux condenser and an agitator, and was heated to 90°C under agitation (initial load).

Next, under agitation, a mixed solution containing 49.4 g (0.19 mol) of a 37 mass% sodium acrylate aqueous solution (hereinafter, referred to as 37% SA), 6.0 g (0.042 mol) of MGA, 4.6 g (0.06 mol) of 48% NaOH, and 3.5 g of pure water, and 14.2 g of 5% NaPS were each dripped in a polymerization reaction system constantly maintained at 90°C, using separate dripping nozzles. The respective dripping times were 60 minutes for the mixed solution of 17.5 g of 80% AA, 6.0 g of MGA, 48% NaOH, and pure water, and 65 minutes for 5% NaPS. It should be noted that the dripping all started simultaneously. Furthermore, during the respective dripping times, a drip rate of each component was constant and dripping was conducted continuously. After the end of the dripping, the reaction solution was further maintained at 90°C over 30 minutes for maturation to complete the polymerization. In such manner, a polymer composition (8) having a solid content concentration of 19 mass% and including a copolymer (polymer (8)) with a final neutralization degree of 90 mol% was obtained. The polymerization formulation was compiled in the following Table 3.

[Table 3]

| Example | | 8 |
|---|---|---|
| Polymer | | (8) |
| MGA/AA | (mass ratio) | 30/70 |
| Initial load | | |
| Mohr's salt | (g) | 0 |
| | (ppm) | 0 |
| MGA | (g) | 0 |
| | (mol) | 0 |
| Pure water | (g) | 29.0 |
| Drip | | |
| 37% SA | (g) | 49.4 |
| | (mol) | 0.19 |
| MGA | (g) | 6.0 |
| | (mol) | 0.042 |
| 5% NaPS | (g) | 14.2 |
| | (g/mol) | 3 |

(continued)

| Example | | 8 |
|---|---|---|
| 48% NaOH | (g) | 4.6 |
| | (mol) | 0.06 |
| Pure water | (g) | 3.5 |
| Dripping time | | |
| 37% SA | (min) | 0-60 |
| MGA | (min) | 0-60 |
| 5% NaPS | (min) | 0-65 |
| 48% NaOH | (min) | 0-60 |
| Pure water | (min) | 0-60 |
| Reaction temperature | (°C) | 90 |
| Maturation time | (min) | 30 |
| Final neutralization degree | (%) | 90 |
| Final solid content | (mass%) | 19.7 |
| Total load | (g) | 107.3 |

<Example 9>

41.0 g of pure water was loaded in a glass separable flask having a capacity of 300 mL and equipped with a reflux condenser and an agitator, and was heated to 90°C under agitation (initial load).

Next, under agitation, a mixed solution containing 17.5 g (0.19 mol) of 80% AA, 6.0 g (0.042 mol) of MGA, and 39.5 g of pure water, 9.4 g of 5% NAPS, and 19.4 g of a 5 mass% sodium bisulfite aqueous solution (hereinafter, referred to as 5% SBS) were each dripped in a polymerization reaction system constantly maintained at 90°C, using separate dripping nozzles. The respective dripping times were 60 minutes for the mixed solution of 80% AA, MGA, 5% SBS, and pure water, and 65 minutes for 5% NaPS. It should be noted that the dripping all started simultaneously. Furthermore, during the respective dripping times, a drip rate of each component was constant and dripping was conducted continuously. After the end of the dripping, the reaction solution was further maintained at 90°C over 30 minutes for maturation to complete the polymerization. After the completion of the polymerization and after the reaction solution was radiationally cooled, 20.8 g (i.e., 0.25 mol) of 48% NaOH was slowly dripped in the reaction solution under agitation to neutralize the solution. In such manner, a polymer composition (9) having a solid content concentration of 14 mass% and including a copolymer (polymer (9)) with a final neutralization degree of 90 mol% was obtained. The polymerization formulation was compiled in the following Table 4.

[Table 4]

| Example | | 9 |
|---|---|---|
| Polymer | | (9) |
| MGA/AA | (mass ratio) | 30/70 |
| Initial load | | |
| Mohr's salt | (g) | 0.0032 |
| | (ppm) | 3 |
| MGA | (g) | 0 |
| Mw144 | (mol) | 0 |
| Pure water | (g) | 41.0 |
| Drip | | |
| 80% AA | (g) | 17.5 |
| | (mol) | 0.19 |
| MGA | (g) | 6.0 |
| | (mol) | 0.042 |
| 5% NaPS | (g) | 9.4 |

(continued)

| Example | | 9 |
|---|---|---|
| | (g/mol) | 2 |
| 5% SBS | (g) | 19.44 |
| | (g/mol) | 4 |
| Pure water | (g) | 39.5 |
| Dripping time | | |
| 80% AA | (min) | 0-60 |
| MGA | (min) | 0-60 |
| 5% NaPS | (min) | 0-65 |
| 48% NaOH | (min) | - |
| 5% SBS | (min) | 0-60 |
| Pure water | (min) | 0-60 |
| Reaction temperature | (°C) | 90 |
| Maturation time | (min) | 30 |
| Polymerization neutralization degree | (%) | 0 |
| Polymerization concentration | (mass%) | 20 |
| Post-processing | | |
| 48% NaOH | (g) | 20.8 |
| | (mol) | 0.25 |
| Final neutralization degree | (%) | 90 |
| Final solid content | (mass%) | 13.7 |
| Total load | (g) | 153.7 |

<Comparative Example 1>

272.1 g of pure water and 30.0 g (0.20 mol) of MGA were loaded in a glass separable flask having capacity of 500 mL and equipped with a reflux condenser and an agitator; and the mixture was heated to 90°C under agitation for dissolution. Here, 0.006 g of Mohr's salt (3 ppm in terms of the mass of iron (II) with respect to the total load amount), and 4.2 g of 15% NaPS were added. The mixture was gently agitated, and then left still for 1 hour at 90°C. After 1 hour, 0.3 g of NAPS was additionally added, and the mixture was further maintained at 90°C for 1 hour for maturation to complete the polymerization. After the completion of the polymerization and after the reaction solution was radiationally cooled, 31.0 g of 48% NaOH was slowly dripped in the reaction solution under agitation to neutralize the solution. In such manner, a comparative polymer composition (1) having a solid content concentration of 29.4 mass% and including a copolymer (comparative polymer (1)) with a final neutralization degree of 90 mol% was obtained. The polymerization formulation was compiled in the following Table 5.

<Comparative Example 2>

338.7 g of pure water and 30.0 g (0.20 mol) of MGA were loaded in a separable flask made of glass, having a capacity of 500 mL and equipped with a reflux condenser and an agitator; and the mixture was heated to 90°C under agitation for dissolution. Here, 9.4 g (0.10 mol) of 80% AA, 0.008 g of Mohr's salt (3 ppm in terms of the mass of iron (II) with respect to the total load amount), and 6.3 g of 15% NaPS were added. The mixture was gently agitated, and then left still for 1 hour at 90°C. After 1 hour, 0.5 g of NaPS was additionally added, and the mixture was further maintained at 90°C for 1 hour for maturation to complete the polymerization. After the completion of the polymerization and after the reaction solution was radiationally cooled, 39.0 g of 48% NaOH was slowly dripped in the reaction solution under agitation to neutralize the solution. In such manner, a comparative polymer composition (2) having a solid content concentration of 14.5 mass% and including a copolymer (comparative polymer (2)) with a final neutralization degree of 90 mol% was obtained. The polymerization formulation was compiled in the following Table 5.

[Table 5]

| Comparative Example | | 1 | 2 |
|---|---|---|---|
| Comparative polymer | | Comparative (1) | Comparative (2) |
| MGA/AA | (mass ratio) | 100/0 | 80/20 |
| Initial load | | | |
| Mohr's salt | (g) | 0.006 | 0.008 |
| | (ppm) | 3 | 3 |
| MGA | (g) | 30 | 30 |
| | (mol) | 0.2 | 0.2 |
| Pure water | (g) | 272.1 | 338.7 |
| Drip | | | |
| 80% AA | (g) | 0 | 9.4 |
| | (mol) | 0 | 0.1 |
| 15% NaPS | (g) | 4.2 | 6.3 |
| | (g/mol) | 3 | 3 |
| Dripping time | | | |
| 80% AA | (min) | 0 | 0 |
| 15% NaPS | (min) | 0 | 0 |
| Reaction temperature | (°C) | 90 | 90 |
| Maturation time | (min) | 60 | 60 |
| Polymerization concentration | (mass%) | 10 | 10 |
| Post-processing | | | |
| NaPS | (g) | 0.3 | 0.5 |
| 48% NaOH | (g) | 31 | 39 |
| Degree of neutralization | (%) | 90 | 90 |
| Loaded solid content | (mass%) | 14.8 | 14.5 |
| Total load | (g) | 308 | 394 |

<Comparative Example 3>

1112.0 g of pure water and 294.0 g of maleic anhydride were loaded in a separable flask made of SUS, having a capacity of 5 liters and equipped with a reflux condenser and an agitator; and 250.0 g of a 48% sodium hydroxide aqueous solution was added thereto. Then, the mixture was heated to a boiling point under agitation.

Next, under agitation, 630.0 g of a 80% acrylic acid aqueous solution, 400.0 g of a 15% sodium persulfate aqueous solution, and 44.0 g of ion exchanged water were each dripped therein using separate dripping nozzles, over 180 minutes for 80% acrylic acid aqueous solution and over 190 minutes for the others.

After the end of the dripping, the reaction solution was further maintained at a boiling-point reflux condition over 20 minutes to complete the polymerization. After the completion of the polymerization and after the reaction solution was radiationally cooled, 725.0 g of a 48% sodium hydroxide aqueous solution was slowly added to neutralize the solution. In such manner, an acrylic acid-maleic acid copolymer (comparative polymer (3)) having a final neutralization degree of 90% was obtained.

<Example 10>

Molecular weight, $H_2O_2$ stabilizing ability, calcium ion capturing ability (abbreviated as capturing ability), and antigelation property were measured for each of the obtained polymers (1) to (9) and comparative polymers (1) to (3), and the results are shown in the following Table 6.

[Table 6]

| | Monomer composition | Composition ratio (mass ratio) | Mw | $H_2O_2$ stabilizing ability (%) | Capturing ability ($CaCO_3$ mg/g) | Antigelation property |
|---|---|---|---|---|---|---|
| Polymer (1) | MGA/AA | 70/30 | 11000 | 78.3 | 285 | 879 |
| Polymer (2) | MGA/AA | 70/30 | 11000 | 78.1 | 283 | 863 |
| Polymer (3) | MGA/AA | 70/30 | 31000 | 77.8 | 290 | 786 |
| Polymer (4) | MGA/AA | 50/50 | 11000 | 83.3 | 272 | 928 |
| Polymer (5) | MGA/AA | 50/50 | 15000 | 83.6 | 277 | 858 |
| Polymer (6) | MGA/AA | 50/50 | 20000 | 84.2 | 270 | 1212 |
| Polymer (7) | MGA/AA | 30/70 | 38000 | 91.1 | 268 | 1574 |
| Polymer (8) | MGA/AA | 30/70 | 23000 | 91.3 | 258 | 1555 |
| Polymer (9) | MGA/AA | 30/70 | 14000 | 90.5 | 263 | 855 |
| Comparative polymer (1) | MGA/AA | 80/20 | 9000 | 66.3 | 290 | - |
| Comparative polymer (2) | MGA | 100/0 | 6000 | 60.6 | 310 | 1130 |
| Comparative polymer (3) | MA/AA | 41/59 | 10000 | 32.1 | 300 | 506 |

It should be noted that, "MA" in the table represents maleic acid.

The results in Table 6 indicate that the copolymers of the present invention have high calcium ion capturing ability and antigelation property, and have high hydrogen peroxide stabilizing ability when compared to hitherto known polymers.

Therefore, when the polymers of the present invention are blended, for example, in a fiber treatment agent, an excellent bleaching treatment becomes possible. That is, by suppressing deposition of calcium scales, it becomes possible to suppress deterioration of tactile sensation and hygroscopic property of fibers, while improving the degree of whiteness of fibers.

INDUSTRIAL APPLICABILITY

With the 2-methylene glutaric acid copolymer and method for producing the copolymer according to the present invention, it is possible to provide: a polymer that displays excellent heavy metal capturing ability, and fine hydrogen peroxide stabilizing ability, calcium ion capturing ability, and antigelation property; and a method for producing the polymer. Therefore, the present invention can be suitably used in fields of, for example, fiber treatment agents and the like.

## Claims

**1.** A 2-methylene glutaric acid copolymer including:

a structural unit derived from a 2-methylene glutaric acid (salt) at a proportion of 30 to 70 mass% (acid form equivalent) with respect to 100 mass% of structural units derived from total monomers, and
a structural unit derived from an unsaturated carboxylic acid monomer at a proportion of 30 to 70 mass% (acid form equivalent) with respect to 100 mass% of the structural units derived from the total monomers, wherein the unsaturated carboxylic acid monomer is at least one member selected from the group consisting of acrylic acid, methacrylic acid, maleic acid, fumaric acid and crotonic acid.

**2.** A 2-methylene glutaric acid copolymer obtained through polymerization of a mixture including
a 2-methylene glutaric acid (salt) at a proportion of 30 to 70 mass% (acid form equivalent) with respect to 100 mass% of a total monomer composition, and
an unsaturated carboxylic acid monomer at a proportion of 30 to 70 mass% (acid form equivalent) with respect to 100 mass% of a total monomer composition, wherein
the unsaturated carboxylic acid monomer is at least one member selected from the group consisting of acrylic acid, methacrylic acid, maleic acid, fumaric acid and crotonic acid.

3. A method for producing a 2-methylene glutaric acid copolymer, the method comprising polymerizing a mixture including
a 2-methylene glutaric acid (salt) at a proportion of 30 to 70 mass% (acid form equivalent) with respect to 100 mass% of a total monomer composition, and
an unsaturated carboxylic acid monomer at a proportion of 30 to 70 mass% (acid form equivalent) with respect to 100 mass% of a total monomer composition, wherein
the unsaturated carboxylic acid monomer is at least one member selected from the group consisting of acrylic acid, methacrylic acid, maleic acid, fumaric acid and crotonic acid.

## Patentansprüche

1. 2-Methylenglutarsäure-Copolymer, das Folgendes einschließt:

   eine Struktureinheit, die von einer 2-Methylenglutarsäure(salz) abgeleitet ist in einem Anteil von 30 bis 70 Massen-% (Säureformäquivalent) bezogen auf 100 Massen-% von Struktureinheiten, die von der Gesamtmenge an Monomeren abgeleitet sind, und
   eine Struktureinheit, die von einem ungesättigten Carbonsäuremonomer abgleitet ist, in einem Anteil von 30 bis 70 Massen-% (Säureformäquivalent) unter Bezug auf 100 Massen-% der Struktureinheiten, die von der Gesamtmenge an Monomeren abgeleitet sind, wobei
   das ungesättigte Carbonsäuremonomer mindestens ein Mitglied ausgewählt aus der Gruppe bestehend aus Acrylsäure, Methacrylsäure, Maleinsäure, Fumarsäure und Crotonsäure ist.

2. 2-Methylenglutarsäure-Copolymer, das durch Polymerisation einer Mischung erhalten wird, die einschließt
eine 2-Methylenglutarsäure(salz) in einem Anteil von 30 bis 70 Massen-% (Säureformäquivalent) unter Bezug auf 100 Massen-% einer gesamten Monomerzusammensetzung und
ein ungesättigtes Carbonsäuremonomer in einem Anteil von 30 bis 70 Massen-% (Säureformäquivalent) unter Bezug auf 100 Massen-% einer gesamten Monomerzusammensetzung, wobei
das ungesättigte Carbonsäuremonomer mindestens ein Mitglied ausgewählt aus der Gruppe bestehend aus Acrylsäure, Methacrylsäure, Maleinsäure, Fumarsäure und Crotonsäure ist.

3. Verfahren zum Herstellen eines 2-Methylenglutarsäure-Copolymers, wobei das Verfahren das Polymerisieren einer Mischung umfasst, die einschließt
eine 2-Methylenglutarsäure(salz) in einem Anteil von 30 bis 70 Massen-% (Säureformäquivalent) unter Bezug auf 100 Massen-% einer gesamten Monomerzusammensetzung und
ein ungesättigtes Carbonsäuremonomer in einem Anteil von 30 bis 70 Massen-% (Säureformäquivalent) unter Bezug auf 100 Massen-% einer gesamten Monomerzusammensetzung, wobei
das ungesättigte Carbonsäuremonomer mindestens ein Mitglied ausgewählt aus der Gruppe bestehend aus Acrylsäure, Methacrylsäure, Maleinsäure, Fumarsäure und Crotonsäure ist.

## Revendications

1. Copolymère d'acide 2-méthylèneglutarique comprenant :

   un motif structurel dérivé d'un acide 2-méthylèneglutarique (sel) en une proportion de 30 à 70 % en masse (en équivalent de la forme acide) pour 100 % en masse des motifs structurels dérivés des monomères totaux, et
   un motif structurel dérivé d'un monomère d'acide carboxylique insaturé en une proportion de 30 à 70 % en masse (en équivalent de la forme acide) pour 100 % en masse des motifs structurels dérivés des monomères totaux,
   dans lequel le monomère d'acide carboxylique insaturé est au moins un élément choisi dans l'ensemble constitué par l'acide acrylique, l'acide méthacrylique, l'acide maléique, l'acide fumarique et l'acide crotonique.

2. Copolymère d'acide 2-méthylèneglutarique obtenu par polymérisation d'un mélange comprenant
un acide 2-méthylèneglutarique (sel) en une proportion de 30 à 70 % en masse (en équivalent de la forme acide) pour 100 % en masse de la composition de monomères totale, et
un monomère d'acide carboxylique insaturé en une proportion de 30 à 70 % en masse (en équivalent de la forme acide) pour 100 % en masse de la composition de monomères totale,

dans lequel le monomère d'acide carboxylique insaturé est au moins un élément choisi dans l'ensemble constitué par l'acide acrylique, l'acide méthacrylique, l'acide maléique, l'acide fumarique et l'acide crotonique.

3. Procédé pour produire un copolymère d'acide 2-méthylèneglutarique, lequel procédé comprend la polymérisation d'un mélange comprenant
un acide 2-méthylèneglutarique (sel) en une proportion de 30 à 70 % en masse (en équivalent de la forme acide) pour 100 % en masse de la composition de monomères totale, et
un monomère d'acide carboxylique insaturé en une proportion de 30 à 70 % en masse (en équivalent de la forme acide) pour 100 % en masse de la composition de monomères totale,
dans lequel le monomère d'acide carboxylique insaturé est au moins un élément choisi dans l'ensemble constitué par l'acide acrylique, l'acide méthacrylique, l'acide maléique, l'acide fumarique et l'acide crotonique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000143737 A
- JP H1077597 B
- JP H1060478 B